# EUROPEAN PATENT APPLICATION

(11) **EP 2 450 797 A1**
(43) Date of publication of application: **09.05.2012**
(21) Application number: 10786106.4
(22) Date of filing: 02.06.2010
(51) Int. Cl.: G06F 11/00, H04N 7/173

(54) **SOFTWARE UPDATING SYSTEM, DISPLAY UNIT AND SOFTWARE UPDATING METHOD**

(30) Priority: 08.06.2009 JP 2009137263
(71) Applicant: Sharp Kabushiki Kaisha, Osaka-shi, Osaka 545-8522 (JP)
(72) Inventor: WATANABE, Haruhito, Osaka-shi, Osaka 545-8522 (JP); SHIMIZU, Yoshiyuki, Osaka-shi, Osaka 545-8522 (JP); ASAKA, Hiroyuki, Osaka-shi, Osaka 545-8522 (JP); ARAMAKI, Hiroshi, Osaka-shi, Osaka 545-8522 (JP); MIZUNO, Kyohji, Osaka-shi, Osaka 545-8522 (JP)
(74) Representative: Müller - Hoffmann & Partner
(86) International application number: PCT/JP2010/059357
(87) International publication number: WO 2010/143575

(57) **Abstract**

In a system where a plurality of electronic devices are connected via digital audio transmission lines based on the S/PDIF standard or the like, quick and easy update of software is made possible even if the electronic devices are not provided with a broadcast reception function, a network connection function and the like. A TV (1) is connected to an AV amplifier (2) via an S/PDIF line (3). The TV (1) is provided with: a tuner (11) that acquires update data used for updating software in the AV amplifier (2); and a S/PDIF terminal (19) that transmits the thus acquired update data to the AV amplifier (2) via the S/PDIF line (3). The AV amplifier (2) is provided with a controller (21) that updates the software in the AV amplifier (2) with the update data transmitted by the TV (1).

## Description

### TECHNICAL FIELD

The present invention relates to a software updating system for updating software of an electronic device connectable via a digital audio transmission line such as S/PDIF (Sony/Philips Digital Interface), a displaying unit making up the system, and a software updating method.

### BACKGROUND ART

Update data for updating software such as firmware of an electronic device (hereinafter, referred to as the update data) can normally be downloaded and acquired from a communication network or a broadcast network. For example, if an internet connection function is equipped as in the case of PC (personal computer), update data can be downloaded from a web site on the internet to automatically or manually update the software. In the case of a television apparatus, broadcast wave including update data can be received to update the software of the television apparatus. Some of the recent television apparatuses have both a broadcast reception function and an internet connection function and can update software without placing a burden on users.

With regard to a conventional technique related to software update in electronic devices, for example, Patent Document 1 describes a broadcast wave download system that updates software of household electrical appliance under the control of a broadcast receiver, for example, devices such as a hard disc recorder and a refrigerator. In this technique, the broadcast receiver receives broadcast wave data and judges whether the broadcast wave data includes device data (data for updating software of a device) related to possessed devices under the control of the broadcast receiver and, if the apparatus data is included, the device data is transmitted via an HDMI cable to a corresponding possessed device to update the software of the device such as a refrigerator.

Patent Document 2 describes an information update system capable of easily upgrading control programs of displaying apparatuses using commands defined by a standard of an interactive cable. A reproducing apparatus making up this system reads an update file from an optical disk, creates vendor commands indicative of the contents of the update file based on the standard of HDMI (High Definition Multimedia Interface), and transmits the created vendor commands from an HDMI port to a television. The television upgrades firmware of the television by the vendor commands.

The techniques of Patent Documents 1 and 2 enable transmission of update data from one HDMI-connected device to the other device to update software in the other device based on this update data. Therefore, even if the other device has neither a broadcast reception function nor an internet connection function, the software can easily be updated.

### PRIOR ART DOCUMENT

### PATENT DOCUMENT

Patent Document 1: Japanese Laid-Open Patent Publication No. 2008-236031
Patent Document 2: Japanese Laid-Open Patent Publication No. 2008-165698

### SUMMARY OF THE INVENTION

### PROBLEM TO BE SOLVED BY THE INVENTION

However, the following problem occurs if a bidirectional CEC (Consumer Electronics Control) line in the HDMI standard is used for transmission of update data.

Assuming that a data volume of software of an electronic device to be updated is about 1 MB, since the CEC line has a slow physical transmission rate of about 300 bps, the time required for the data transmission is 8,000,000 (bit)/300 (bps)=26,667 (seconds)≈7 hours and 30 minutes. Actual data transmission needs handshake (flow control) and it is thought that the actual data transmission time is about twice as long as the time described above.

If it is attempted to update software of an electronic device without a broadcast reception function, a network connection function, etc., the data transmission is desirably completed within ten minutes at the most in consideration of practicality; however, if the CEC line is used for data transmission, the time such as described above is required, which is not practical. Although update can be implemented by a recording medium that records update data, this method requires users to acquire the recording medium from a manufacturer for each update and to manually perform software update operation, problematically increasing a burden of users.

The present invention was conceived in view of the situations and it is therefore an object of the present invention to enable rapid and easy update of software even in an electronic device without a broadcast reception function, a network connection function, etc., in a system having a plurality of electronic devices connected through a digital audio transmission line such as S/PDIF.

### MEANS FOR SOLVING THE PROBLEM

To solve the problems, a first technical means is a software updating system having a displaying unit and an electronic device connected via a digital audio transmission line, wherein the displaying unit includes an update data acquiring means that acquires update data for updating software of the electronic device and an update data transmitting means that transmits the acquired update data through the digital audio transmission line to the electronic device, the electronic device includes a software updating means that updates the software of the electronic device with the update data transmitted from the displaying unit.

A second technical means is the software updating system as defined in the first technical means, wherein the displaying unit includes an identification information storage means that stores identification information and software version information of the electronic device, and if the update data includes identification information and software version information of the electronic device and the software version information is newer than version information stored in the identification information storage means, the update data transmitting means transmits the update data through the digital audio transmission line to the electronic device.

A third technical means is the software updating system as defined in the first technical means, wherein the displaying unit includes an identification information storage means that stores identification information and software version information of the electronic device, and if the update data includes identification information and software version information of the electronic device and the software version information is newer than version information stored in the identification information storage means, the displaying unit displays a selection screen for allowing a user to select whether the software of the electronic device is updated, and if the user selects update of the software on the selection screen, the update data transmitting means transmits the update data through the digital audio transmission line to the electronic device.

A fourth technical means is the software updating system as defined in the second or third technical means, wherein the displaying unit is made up of a displaying device including the update data acquiring means and the update data transmitting means, and the displaying device and the electronic device are connected via the digital audio transmission line and also connected via a communication interface.

A fifth technical means is the second or third technical means wherein the displaying unit is made up of a receiving device including the update data acquiring means and a displaying device connected via a communication interface to the receiving device and including the update data transmitting means, and if the displaying device and the electronic device are connected via the digital audio transmission line and also connected via the communication interface, the receiving device transmits the update data through an audio transmission line of the communication interface to the displaying device and the displaying device transmits the update data through the digital audio transmission line to the electronic device.

A sixth technical means is the second or third technical means wherein the displaying unit is made up of a receiving device including the update data acquiring means and the update data transmitting means, and a displaying device connected via a communication interface to the receiving device, and if the displaying device and the electronic device are connected via the communication interface and the receiving device and the electronic device are connected via the digital audio transmission line, the receiving device transmits the update data through the digital audio transmission line to the electronic device.

A seventh technical means is the software updating system as defined in any one of the fourth to sixth technical means, wherein the displaying unit transmits a predetermined command via the communication interface to the electronic device to receive and store identification information and software version information of the electronic device from the electronic device in the identification information storage means.

An eighth technical means is the software updating system as defined in any one of the fourth to seventh technical means, wherein the displaying unit transmits to the electronic device a command for notification of transmission of the update data via the communication interface before transmitting the update data through the digital audio transmission line to the electronic device.

A ninth technical means is the software updating system as defined in the eighth technical means, wherein the electronic device includes an audio output means that outputs an audio signal transmitted from the displaying unit to an internal speaker or an external speaker, and mutes audio output by the audio output means from the time of reception of the command until a transmission process of the update data is completed.

A tenth technical means is the software updating system as defined in any one of the first to ninth technical means, wherein the update data has update data of the displaying unit combined with update data of one or more electronic devices connectable to the displaying unit.

An eleventh technical means is the software updating system as defined in any one of the first to tenth technical means, wherein the displaying unit includes an update data storage means that stores update data acquired by the update data acquiring means, and deletes the update data in the update data storage means after the update data transmitting means completes transmission of the update data to the electronic device.

A twelfth technical means is the software updating system as defined in any one of the first to eleventh technical means, wherein the electronic device includes an update data memory means that stores update data transmitted from the displaying unit, and deletes the update data in the update data memory means after the software updating means completes software update.

A thirteenth technical means is the software updating system as defined in any one of the first to twelfth technical means, wherein the displaying unit transmits the update data with dummy data added to the beginning thereof.

A fourteenth technical means is the software updating system as defined in the thirteenth technical means, wherein a data form of the dummy data is different from a data form of the update data.

A fifteenth technical means is the software updating system as defined in the thirteenth technical means, wherein fixed data including identification information of the electronic device is added to a header of the update data.

A sixteenth technical means is the software updating system as defined in the fifteenth technical means, wherein the electronic device includes a header detecting means that detects a header of the update data, from transmission data including dummy data and update data transmitted from the displaying unit, and an update data extracting means that extracts update data of the electronic device based on fixed data of the detected header, and the extracted update data is stored in an update data memory means included in the electronic device.

A seventeenth technical means is the software updating system as defined in the fifteenth technical means, wherein the electronic device includes a buffer memory that temporarily stores transmission data including dummy data and update data transmitted from the displaying unit, a header detecting means that detects a header of the update data from the transmission data stored in the buffer memory, and an update data extracting means that extracts update data of the electronic device based on fixed data of the detected header, and the extracted update data is stored in an update data memory means included in the electronic device.

An eighteenth technical means is the software updating system as defined in any one of the first to seventeenth technical means, wherein the update data acquiring means is a receiving means that receives broadcast wave including update data.

A nineteenth technical means is the software updating system as defined in any one of the first to seventeenth technical means, wherein the update data acquiring means is a network connecting means that connects via a network to a server apparatus storing update data to download the update data from the server apparatus.

A twentieth technical means is the software updating system as defined in any one of the fourth to ninth technical means, wherein the communication interface is HDMI, and the electronic device is a repeater device.

A twenty-first technical means is the software updating system as defined in any one of the fourth to ninth technical means, wherein the communication interface is IEEE1394.

A twenty-second technical means is the software updating system as defined in any one of the first to twenty-first technical means, wherein the digital audio transmission line is an S/PDIF line.

A twenty-third technical means is a displaying unit making up the software updating system as defined in any one of the first to twenty-second technical means, comprising: an update data acquiring means that acquires update data for updating software of an electronic device; and an update data transmitting means that transmits the acquired update data through the digital audio transmission line to the electronic device.

A twenty-fourth technical means is a software updating method by a software updating system having a displaying unit and an electronic device connected via a digital audio transmission line, wherein the displaying unit includes the steps of acquiring update data for updating software of the electronic device and of transmitting the acquired update data through the digital audio transmission line to the electronic device, and the electronic device includes the step of updating the software of the electronic device with the update data transmitted from the displaying unit.

### EFFECT OF THE INVENTION

According to the present invention, in a system having a plurality of electronic devices connected via a digital audio transmission line such as S/PDIF, software can rapidly and easily be updated even in an electronic device without a broadcast reception function, a network connection function, etc., by using a digital audio transmission line to transmit update data.

### BRIEF DESCRIPTION OF DRAWINGS

[Fig. 1] Fig. 1 is a diagram of an example of a software updating system according to a first embodiment of the present invention.
[Fig. 2] Fig. 2 is a block diagram of an exemplary configuration of a TV and an AV amplifier depicted in Fig. 1.
[Fig. 3] Fig. 3 is a diagram for explaining an example of a method of acquiring update data of the AV amplifier by the TV.
[Fig. 4] Fig. 4 is a diagram for explaining another example of a method of acquiring update data of the AV amplifier by the TV.
[Fig. 5] Fig. 5 is a flowchart for explaining an operation example of the TV in the software updating system depicted in Fig. 1.
[Fig. 6] Fig. 6 is a flowchart for explaining an operation example of the AV amplifier in the software updating system depicted in Fig. 1.
[Fig. 7] Fig. 7 is a diagram for explaining an example of a command flow by the software updating system depicted in Fig. 1.
[Fig. 8] Fig. 8 is a diagram of an example of update data to which dummy data is added.
[Fig. 9] Fig. 9 is a diagram of an example of a format of update data transmitted from the TV to the AV amplifier.
[Fig. 10] Fig. 10 is a block diagram of a specific exemplary configuration for extracting update data in the AV amplifier.
[Fig. 11] Fig. 11 is a block diagram of another specific exemplary configuration for extracting update data in the AV amplifier.
[Fig. 12] Fig. 12 is a diagram of an example of a software updating system according to a second embodiment of the present invention.
[Fig. 13] Fig. 13 is a block diagram of an exemplary configuration of a recorder, a TV, and an AV amplifier depicted in Fig. 12.
[Fig. 14] Fig. 14 is a flowchart for explaining an operation example of the recorder in the software updating system depicted in Fig. 12.
[Fig. 15] Fig. 15 is a flowchart for explaining an operation example of the TV in the software updating system depicted in Fig. 12.
[Fig. 16] Fig. 16 is a flowchart for explaining an operation example of the AV amplifier in the software updating system depicted in Fig. 12.
[Fig. 17] Fig. 17 is a diagram for explaining an example of a command flow by the software updating system depicted in Fig. 12.
[Fig. 18] Fig. 18 is a diagram of an example of a software updating system according to a third embodiment of the present invention.
[Fig. 19] Fig. 19 is a block diagram of an exemplary configuration of a recorder, a TV, and an AV amplifier depicted in Fig. 18.

### MODES FOR CARRYING OUT THE INVENTION

Preferred embodiments of a software updating system, a displaying unit, and a software updating method of the present invention will now be described with reference to the accompanying drawings. The same constituent elements are denoted by the same reference numerals in the figures and will not repeatedly be described. Although S/PDIF is exemplarily illustrated as a digital audio transmission line and HDMI is exemplarily illustrated as a communication interface in the description, the present invention is not limited by these example.

### (First Embodiment)

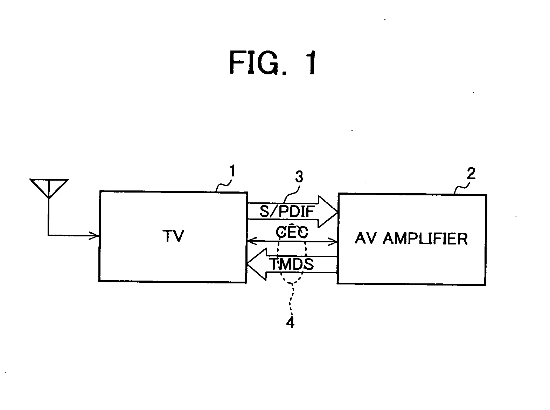

Fig. 1 is a diagram of an example of a software updating system according to a first embodiment of the present invention and, in Fig. 1, reference numerals 1, 2, 3, and 4 denote a TV (television), an AV amplifier, an S/PDIF cable, and an HDMI cable, respectively. A displaying unit of this embodiment is made up of the TV 1 and is referred to as a sink device in the HDMI standard. The AV amplifier 2 corresponds to an electronic device and is referred to as a repeater device in the HDMI standard. This embodiment will be described based on a system configuration with the TV 1 and the AV amplifier 2 HDMI-connected and also S/PDIF-connected to each other. In other words, the TV 1 and the AV amplifier 2 are connected to each other through the S/PDIF cable 3 (hereinafter referred to as the S/PDIF line 3) and the HDMI cable 4.

Audio transmission through the S/PDIF line 3 is performed by optical digital audio terminals or coaxial digital terminals included in devices. Audio transmission modes and connection terminals of S/PDIF are standardized by IEC60958 and EIAJRC-5720B. The HDMI cable 4 includes a TMDS (Transition Minimized Differential Signaling) line (digital signal line) for transmitting video/audio signals, which are digital signals, in a differential mode, and a CEC line that is a bidirectional bus for transmitting a control signal (CEC message) common to devices. The HDMI cable 4 additionally includes a DDC (Display Data Channel) line utilized for transmission of EDID (Extended Display Identification Data), HDCP (High-bandwidth Digital Content Protection system) authentication, etc.

The CEC message is a device control signal based on a CEC protocol of the HDMI standard. Exchange of this device control signal between devices realizes various operation controls between HDMI devices. In the case of CEC, a logical address (type of device) and a physical address (position of device) of each HDMI-connected device are acquired and, therefore, this logical address can be specified to transmit a CEC message to a desired device.

A logical address and a physical address in CEC will hereinafter briefly be described.
First, a plurality of logical addresses can be handled depending on a type of device in the standard of HDMI CEC and the logical addresses are unique names in an HDMI network. The logical addresses are different depending on a type of HDMI device. For example, a logical address "0" denotes a displaying device such as a TV; "1" denotes a recording device such as a BD/DVD/HDD recorder; and "5" denotes an audio device such as a speaker and an AV amplifier.

Although the physical address is a unique name in an HDMI network, the physical address (0.0.0.0) is normally assigned to a displaying device. If an HDMI device is added to or disconnected from an HDMI network, the physical address is automatically adjusted. The physical address has addresses for a plurality of layers including a displaying device, is made up of unique number n in the same layers, and is represented in the format of (n.n.n.n). If a layer of an HDMI device directly connected to the displaying device is a first layer, an HDMI device connected to the device of the first layer forms a second layer, and the layer number is increased as a device is separated away from the displaying device. The physical address is described such that the layer number is increased from the left most n of the format (n.n.n.n) to the right.

Since an HDMI device has such a logical address and a physical address, a certain one device can be specified to transmit a CEC message even when a plurality of HDMI devices is connected to an HDMI network.

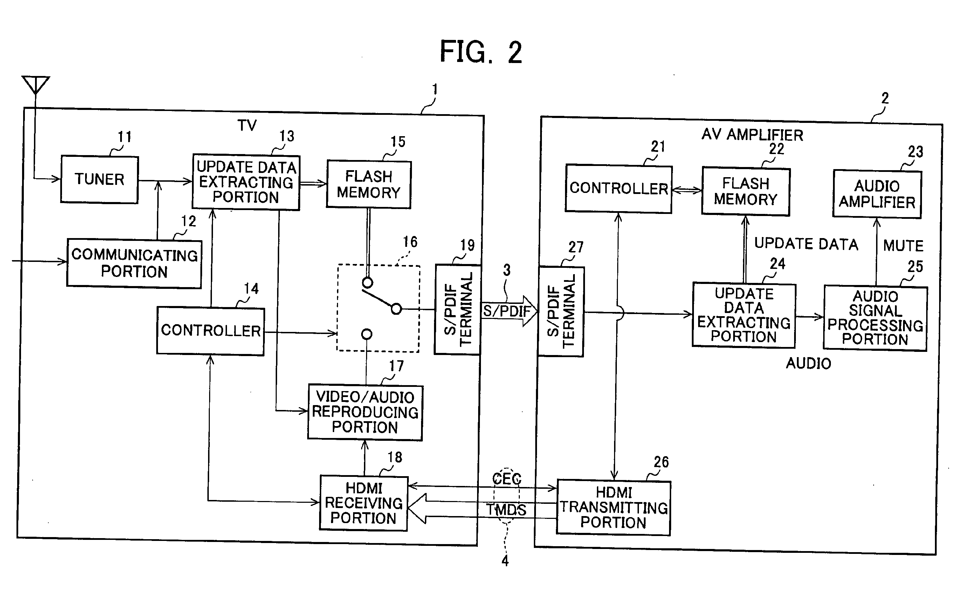

Fig. 2 is a block diagram of an exemplary configuration of the TV 1 and the AV amplifier 2 depicted in Fig. 1. In Fig. 2, the TV 1 includes a tuner 11 that receives broadcast wave via an antenna, a communicating portion 12 that connects to a network (communication network) such as the Internet, an update data extracting portion 13 that extracts update data of the AV amplifier 2 from the broadcast wave received by the tuner 11, a controller 14 that controls the operation of the TV 1, a flash memory 15 that is an example of a non-volatile memory storing various data such as update data, a selector switch 16 that selectively switches input of an S/PDIF terminal 19 to the flash memory 15 or a video/audio reproducing portion 17, the video/audio reproducing portion 17 that executes a reproduction processing of a video signal and an audio signal acquired by the tuner 11 or the communicating portion 12, an HDMI receiving portion 18 that receives a video signal and an audio signal from the AV amplifier 2 and mutually transmits/receives a CEC message to/from the AV amplifier 2, and the S/PDIF terminal 19 that is an example of a digital audio transmission interface transmitting an audio signal via the S/PDIF line 3 to the AV amplifier 2.

The AV amplifier 2 includes a controller 21 that controls the operation of the AV amplifier 2, a flash memory 22 that is a non-volatile semiconductor memory, an audio amplifier 23 that outputs sound from a speaker (not depicted), an update data extracting portion 24 that extracts update data transmitted from the TV 1, an audio signal processing portion 25 that processes an audio signal transmitted from the TV 1, an HDMI transmitting portion 26 that transmits a video signal and an audio signal to the TV 1 and that mutually transmits/receives a CEC message to/from the TV 1, and an S/PDIF terminal 27 that receives an audio signal via the S/PDIF line 3 from the TV 1.

Although the AV amplifier 2 includes an HDMI receiving portion that enables connection with a source device (not depicted) such as a recorder, receives a video signal and an audio signal from the source device, and mutually transmits/receives a CEC message to/from the source device, this will not be described here. The AV amplifier 2 is an electronic device without the tuner 11 and the communicating portion 12.

The present invention is mainly characterized by enabling rapid and easy update of software even in an electronic device without a broadcast reception function, a network connection function, etc., in a system with a plurality of electronic devices connected via a digital audio transmission line such as S/PDIF. For this purpose, the TV 1 includes the tuner 11 or the communicating portion 12 corresponding to an update data acquiring means that acquires update data for updating the software of the AV amplifier 2, and the S/PDIF terminal 19 corresponding to an update data transmitting means that transmits the acquired update data through the S/PDIF line 3 to the AV amplifier 2. The AV amplifier 2 includes the controller 21 corresponding to a software updating means that updates the software of the AV amplifier 2 with the update data transmitted from the TV 1.

In the following description, software is exemplarily illustrated and described as firmware. The update data may be in the form of update firmware entirely updating or may be in the form of a patch file (correction program) for partial update to one firmware.

In Fig. 2, the tuner 11 corresponds to a receiving means that receives broadcast wave including update data. The communicating portion 12 corresponds to a network connecting means that connects via a network to a server apparatus (not depicted) storing update data and downloads the update data from the server apparatus. Although the case of acquiring update data by the tuner 11 or the communicating portion 12 will be described, the update data may be recorded in various recording mediums such as an optical disc (such as BD or DVD), a USB memory, and a memory card so as to acquire the update data from a recording medium.

The TV 1 includes the flash memory 15 corresponding to an identification information storage means that stores identification information and firmware version information of the AV amplifier 2. If the update data acquired by the tuner 11 or the communicating portion 12 includes the identification information and the firmware version information of the AV amplifier 2 and the firmware version information is newer than the version information stored in the flash memory 15, the TV 1 displays a selection screen for allowing a user to select whether the firmware of the AV amplifier 2 is updated. If a user selects the firmware update on the selection screen displayed on the TV 1, the controller 14 switches the selector switch 16 toward the flash memory 15 to transmit the update data stored in the flash memory 15 through the S/PDIF line 3 of the S/PDIF terminal 19 to the AV amplifier 2.

Update data included in broadcast wave has identification information and firmware version information of one or more devices to be updated described in advance in a header etc., and the TV 1 determines whether the update data received by the tuner 11 is the update data having the identification information of the AV amplifier 2 and further determines whether the firmware version information is newer than version information stored in the flash memory 15. If the update data has the identification information of the AV amplifier 2 and the version information is newer, the TV 1 stores this update data in the flash memory 15. This identification information may be any specific information capable of identifying a device, such as a model name, a model number, and a serial number, for example, and is not particularly limited.

Although the TV 1 must preliminarily maintain the. identification information and the firmware version information of the AV amplifier 2, the identification information and the firmware version information may be received from the AV amplifier 2 and stored in the flash memory 15 by transmitting a predetermined CEC message to the AV amplifier 2 at start-up of the TV 1, for example. The CEC message may be implemented by using a vender command that instructs the AV amplifier 2 to transmit the identification information and the firmware version information maintained by the AV amplifier 2 to the TV 1. This vender command is a CEC message independently definable by a manufacturer.

In the case of this example, as described above, the TV 1 is driven to display the selection screen for selecting whether the firmware of the AV amplifier 2 is updated so as to execute a firmware update process based on an instruction from a user. During the firmware update process, it is preferable to display caution etc., for notifying a user of the process, and the TV 1 can display various UI (user interface) screens and caution screens.

A physical transmission rate of the S/PDIF line 3 can be equal to or greater than about 1,536 Mbps (16 bit x 2 ch x 48 kHzfs) and, if a data volume of the firmware of the AV amplifier 2 to be updated is about 1 MB, the time required for the data transmission is 8,000,000 (bit)/1,536 M (bps) ≈5.2 seconds. As described above, the utilization of the S/PDIF line 3 enables drastic reduction in the transmission time of the update data to a sufficiently practical level as compared to the case of utilizing the CEC line.

It is thought that the firmware of the AV amplifier 2 may be updated at various times such as at start-up or termination of the TV 1 or when a user gives an update instruction.

Although the update process is executed based on a firmware update instruction from a user in the description of the example, the update process may automatically be executed at night or a time period when the user is absent. In this case, when the update data acquired from broadcast wave etc., includes the identification information and the firmware version information of the AV amplifier 2 and the TV 1 determines whether the version information is newer than version information stored in the flash memory 15, and if the version information of the update data is newer, the controller 14 switches the selector switch 16 to the flash memory 15 to automatically transmit the update data stored in the flash memory 15 through the S/PDIF line 3 to the AV amplifier 2. The AV amplifier 2 automatically updates the firmware of the AV amplifier 2 with the update data transmitted from the TV 1. In the case of automatic update, it is not necessary to display a UI screen or a caution screen to a user.

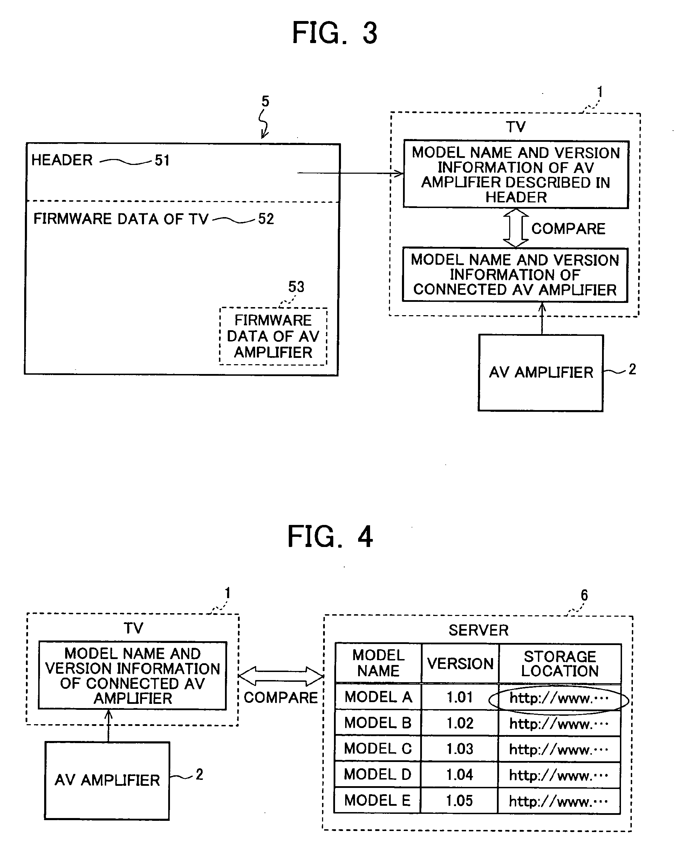

Fig. 3 is a diagram for explaining an example of a method of acquiring update data of the AV amplifier 2 by the TV 1 and, in Fig. 3, reference numeral 5 denotes update firmware data (update data). The update firmware data 5 is made up of a header 51, firmware data 52 of the TV 1, and firmware data 53 of the AV amplifier 2. First, the TV 1 acquires the update firmware data 5 including the firmware data 52 of the TV 1 and the firmware data 53 of the AV amplifier 2 from broadcast wave and stores the update firmware data 5 in the flash memory 15. The header 51 has descriptions of respective model names and pieces of firmware version information of the TV 1 and the AV amplifier 2.

When a user activates the TV 1 or when an update instruction for the AV amplifier 2 is given by a user operation, the TV 1 acquires the model name and the firmware version information from the AV amplifier 2 currently connected to the TV 1 by using a CEC message etc. The TV 1 compares the model name and the version information of the AV amplifier 2 described in the header 51 with the model name and the version information acquired from the AV amplifier 2, and if the model names agree with each other and the version information described in the header 51 is newer than the other one, the TV 1 stores the update firmware data 5 in the flash memory 15 and permits update of the firmware of the AV amplifier 2. If the model names do not agree with each other or if the version information described in the header 51 is the same or older version even when the model names agree with each other, the update firmware data 5 is deleted from the flash memory 15.

In the example of Figure 3, the update firmware data 5 may have the update data of the TV 1 combined with the update data of one or more AV amplifiers connectable to the TV 1. Therefore, the header 51 has descriptions of combinations of the model name of the TV 1 and the model names and pieces of firmware version information of a plurality of AV amplifiers. For example, if five AV amplifiers are connectable to the TV 1, five pairs of the update firmware data are described. If two AV amplifiers are connected to the TV 1, the TV 1 may acquire the update firmware data of the TV 1 and the update firmware data of the two corresponding AV amplifiers. The TV 1 can update the firmware of the TV 1 by the controller 14 with the acquired update firmware data as is the case with the AV amplifier 2.

Although the one AV amplifier 2 is connected to the TV 1 in the case of the exemplary configuration of Fig. 2 in the description, the same processing is available even when a plurality of AV amplifiers or repeater devices such as switchers is connected in a layered form. For example, if another AV amplifier is HDMI-connected on the subsequent stage of the AV amplifier 2 and update data including the identification information of another AV amplifier is transmitted, an arrangement may be made such that the update data of another AV amplifier passes through the AV amplifier 2.

Fig. 4 is a diagram for explaining another example of a method of acquiring update data of the AV amplifier 2 by the TV 1 and, in Fig. 4, reference numeral 6 denotes a server apparatus. The server apparatus 6 stores a version upgrade management file of AV amplifiers. In this example, when a user activates the TV 1 or when an update instruction for the AV amplifier 2 is given by a user operation, the TV 1 acquires the model name and the firmware version information from the AV amplifier 2 currently connected to the TV 1 by using a CEC message etc.

The TV 1 accesses the server apparatus 6 over a network, for example, and refers to the version upgrade management file of AV amplifiers stored in the server 6. It is assumed that models A to E are present as AV amplifiers connectable to the TV 1 to update firmware and that the model A is a model corresponding to the AV amplifier 2. The version upgrade management file stores the latest version information of firmware, a storage location (URL on the Internet) of firmware data, etc., for each of the AV amplifiers (model names).

The TV 1 compares the version information acquired from the AV amplifier 2 with the version information of the AV amplifier 2 (model A) described in the version upgrade management file and, if the version information described in the version upgrade management file is newer than the other one, the TV 1 accesses the storage location described in the version upgrade management file and acquires new update firmware data. The storage location of the update firmware data may be the server apparatus 6 that stores the version upgrade management file. The update of the firmware of the AV amplifier 2 is permitted in this way.

Countermeasures to a failure such as electric power interruption during the transmission of update data from the TV 1 to the AV amplifier 2 or the firmware update in the AV amplifier 2 in Fig. 2 described above will be described as follows.

The TV 1 stores the update data acquired from the tuner 11 in the flash memory 15 corresponding to an update data storage means. After the completion of transmission of the update date to the AV amplifier 2 through the S/PDIF terminal 19, the TV 1 deletes the update data of the flash memory 15. Since the update data is stored in the flash memory 15 even if a failure such as electric power interruption occurs during the transmission of update data and the transmission processing is interrupted, the transmission processing can be executed again after recovery from the failure.

The AV amplifier 2 stores the update data transmitted from the TV 1 in the flash memory 22 corresponding to an update data memory means. After the completion of firmware update by the controller 21, the AV amplifier 2 deletes the update data in the flash memory 22. Since the update data is stored in the flash memory 22 even if a failure such as electric power interruption occurs during the update of firmware and the update process is interrupted, the update process can be executed again after recovery from the failure.

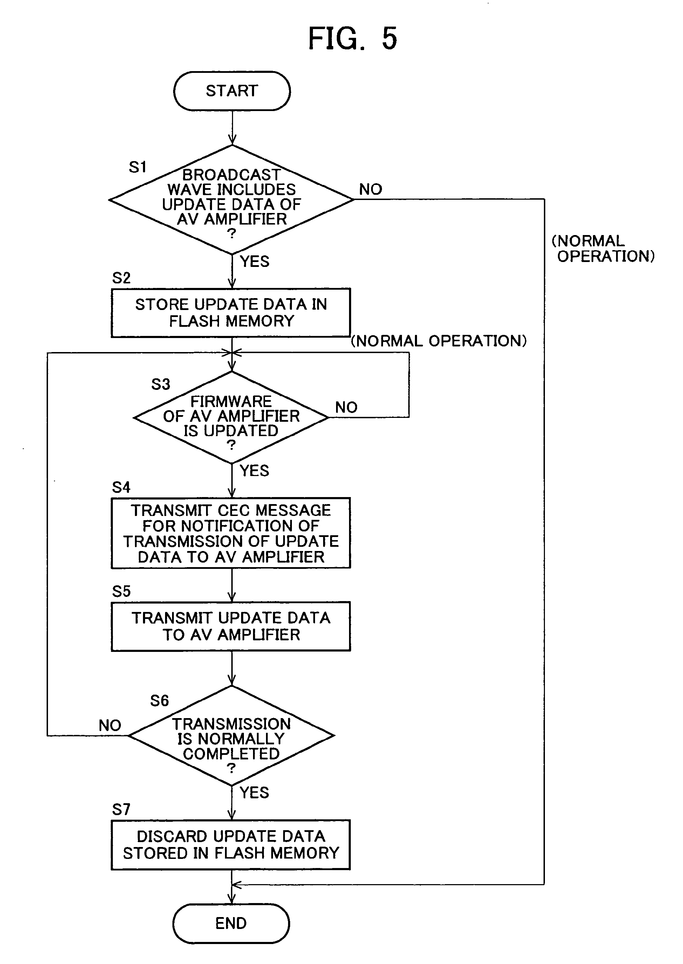

Fig. 5 is a flowchart for explaining an operation example of the TV 1 in the software updating system depicted in Fig. 1. First, the TV 1 determines whether broadcast wave includes update data of the AV amplifier 2 (step S1) and, if broadcast wave includes no update data, or if update data is not the update data of the AV amplifier 2, or if version information of the update data is the same as or older than the current version information of the AV amplifier 2 (in the case of NO), the TV 1 shifts to the normal operation. If broadcast wave includes the update data of the AV amplifier 2 and the version information thereof is newer than the current version information of the AV amplifier 2 at step S1 (in the case of. YES), the TV 1 stores the update data in the flash memory 15 (step S2).

The TV 1 then displays an update selection screen for allowing a user to select whether the firmware of the AV amplifier 2 is updated (step S3). If the user does not select the update process on the update selection screen of the TV 1 (in the case of NO), the operation goes back to step S3 and the TV 1 displays the update selection screen on the TV 1 again at predetermined intervals or at the time of power-off etc., while performing the normal operation. If the user selects the update process on the update selection screen of the TV 1 at step S3 (in the case of YES), the TV 1 transmits to the AV amplifier 2 a CEC message for notification of transmission of the update data (step S4). The TV 1 starts the transmission of the update data through the S/PDIF line 3 to the AV amplifier 2 (step S5).

At steps S4 and S5, the TV 1 transmits to the AV amplifier 2 the CEC message for notification of transmission of the update data before transmitting the update data through the S/PDIF line 3 to the AV amplifier 2. On this occasion, the AV amplifier 2 received this CEC message may completely mute audio output. Specifically, in Fig. 2, the AV amplifier 2 includes the audio signal processing portion 25 corresponding to an audio output means that outputs an audio signal transmitted from the TV 1 to an internal speaker or an external speaker. The controller 21 provides control so as to mute the audio output by the audio signal processing portion 25 from the time of reception of the CEC message until the transmission processing of the update data is completed.

Since the update data is transmitted through the S/PDIF line 3 originally used for transmitting audio signals in the present invention described above, if the update data is accidentally reproduced, a user may feel discomfort and a speaker may be damaged. Therefore, this is prevented by muting the audio output.

In Fig. 5, the TV 1 determines whether the transmission processing of the update data is normally completed (step S6) and, if the transmission processing is not normally completed due to a failure such as electric power interruption (in the case of NO), the operation goes back to step S3 to display the update selection screen after recovery from the failure. If the transmission processing is normally completed at step S6 (in the case of YES), the update data stored in the flash memory 15 is deleted to terminate the processing (step S7).

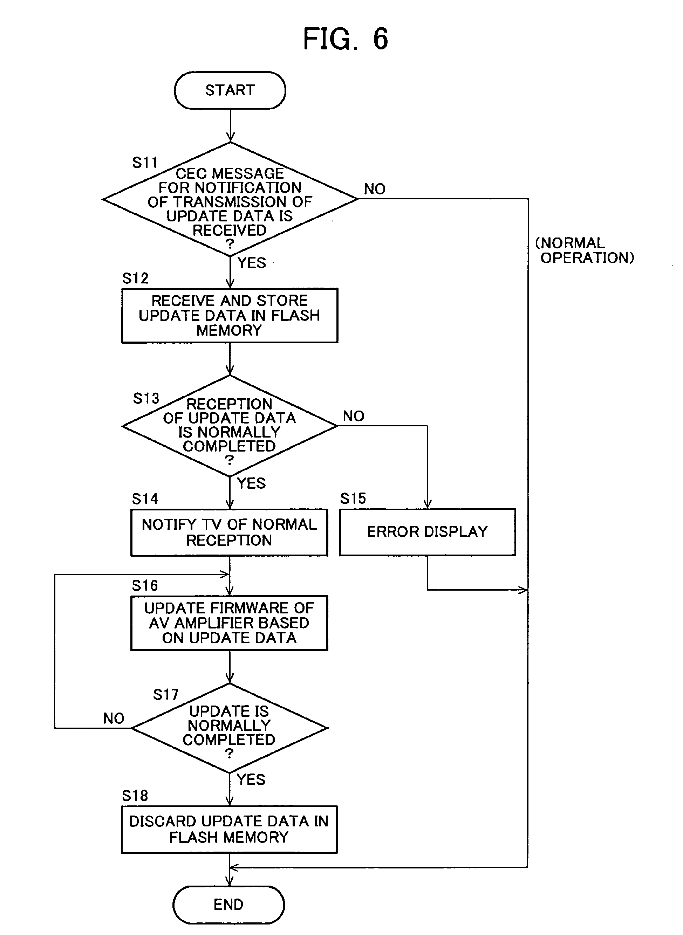

Fig. 6 is a flowchart for explaining an operation example of the AV amplifier 2 in the software updating system depicted in Fig. 1. First, the AV amplifier 2 determines whether a CEC message for notification of transmission of the update data is received from the TV 1 (step S11), and if the CEC message is not received (in the case of NO), the AV amplifier 2 shifts to the normal operation. If the CEC message is received at step S11 (in the case of YES), the AV amplifier 2 stores the update data transmitted through the audio transmission line from the TV 1 in the flash memory 22 (step S12). As described above, the control is provided so as to completely mute the audio output of the AV amplifier 2 during the transmission processing of the update data.

The AV amplifier 2 then determines whether the reception of the update data is normally completed (step S13), and if the reception is normally completed (in the case of YES), the AV amplifier 2 notifies the TV 1 of the normal reception (step S14). If the reception is not normally completed at step S13 (in the case of NO), error is displayed on the screen of the TV 1 (step S15) and the AV amplifier 2 makes a shift to the normal operation.

The AV amplifier 2 then updates the firmware of the AV amplifier 2 based on the received update data (step S16). The AV amplifier 2 determines whether the firmware update process is normally completed (step S17), and if the update process is normally completed (in the case of YES), the AV amplifier 2 discards the update data in the flash memory 22 (step S18) to terminate the operation (step S18). If the update process is not normally completed due to a failure such as electric power interruption at step S17 (in the case of NO), the operation goes back to step S16 to execute the update process again after recovery from the failure.

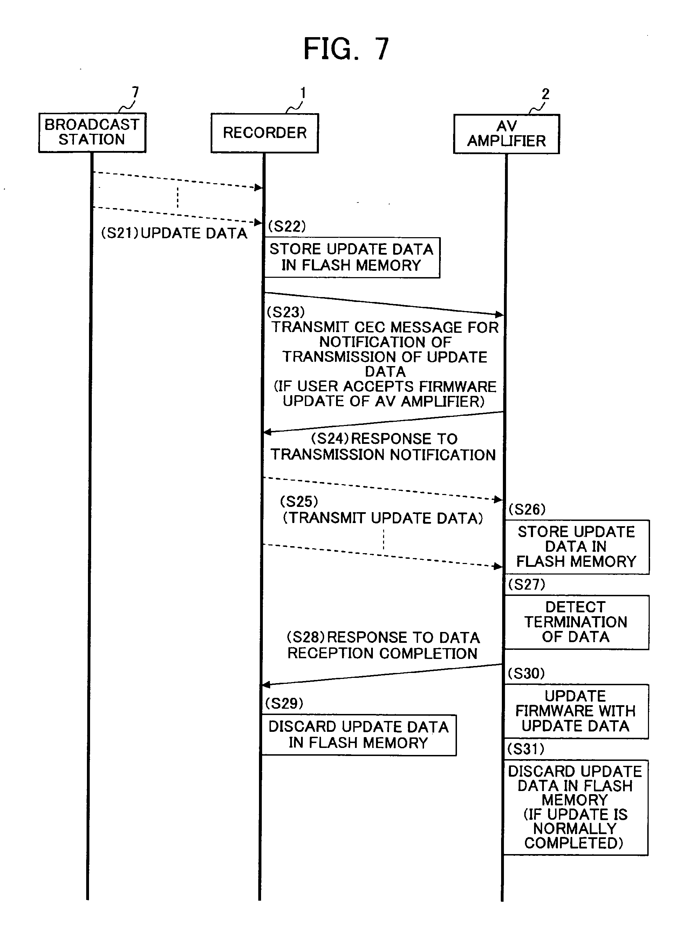

Fig. 7 is a diagram for explaining an example of a command flow by the software updating system depicted in Fig. 1, and in Fig. 7, reference numeral 7 denotes a broadcast station. First, the broadcast station 7 transmits update data of the AV amplifier 2 through broadcast wave (S21), and the TV 1 receives the broadcast wave and stores the update data of the AV amplifier 2 in the flash memory 15 (S22). If a user accepts the firmware update of the AV amplifier 2 on the update selection screen described above, the TV 1 transmits to the AV amplifier 2 the CEC message for notification of transmission of the update data (S23) and the AV amplifier 2 returns a response to this CEC message to the TV 1 (S24).

The TV 1 then transmits the update data stored in the flash memory 15 through the S/PDIF line 3 to the AV amplifier 2 (S25). The AV amplifier 2 stores the update data transmitted from the TV 1 in the flash memory 22 (S26) and when the termination of the update data is detected (S27), the AV amplifier 2 returns a response of data reception completion to the TV 1 (S28). When receiving the response of data reception completion from the AV amplifier 2, the TV 1 discards the update data in the flash memory 15 (S29).

The AV amplifier 2 updates the firmware with the update data stored in the flash memory 22 (S30) and discards the update data in the flash memory 22 (S31) if the update process is normally completed.

Since data and transmission clock are extracted from transmission waveform in the S/PDIF line 3, the data cannot be received until a receiving device (AV amplifier side) enters the PLL (Phased Locked Loop) lock state. Therefore, if update data is simply sent through the S/PDIF line 3, the leading portion of the update data may be missed.

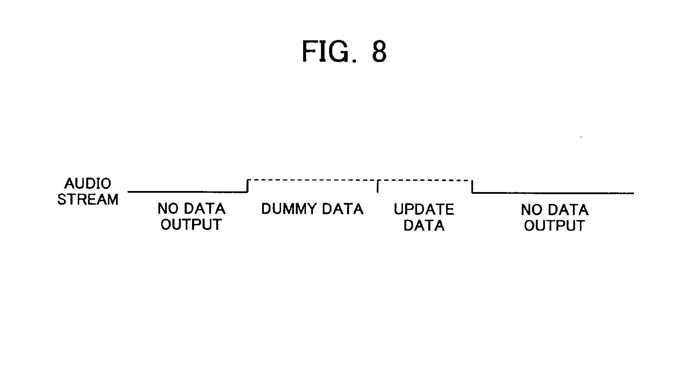

To take measures in this regard, as depicted in Fig. 8, the TV 1 may transmit the update data with dummy data added to the beginning thereof based on instructions from the controller 14. This dummy data is generated by the controller 14 of the TV 1, for example, and the dummy data is added to the beginning of the update data based on the control from the controller 14.

The missing of data can be prevented by completing the PLL lock in the AV amplifier 2 within the portion of the dummy data. It is not preferable to carelessly increase a data volume of the dummy data since a storage capacity of a buffer memory 29 described later is occupied. The dummy data may only be transmitted from the start of transmission until the PLL lock state is achieved and, therefore, a data amount (data length) of the dummy data may be determined as needed depending on a hardware configuration.

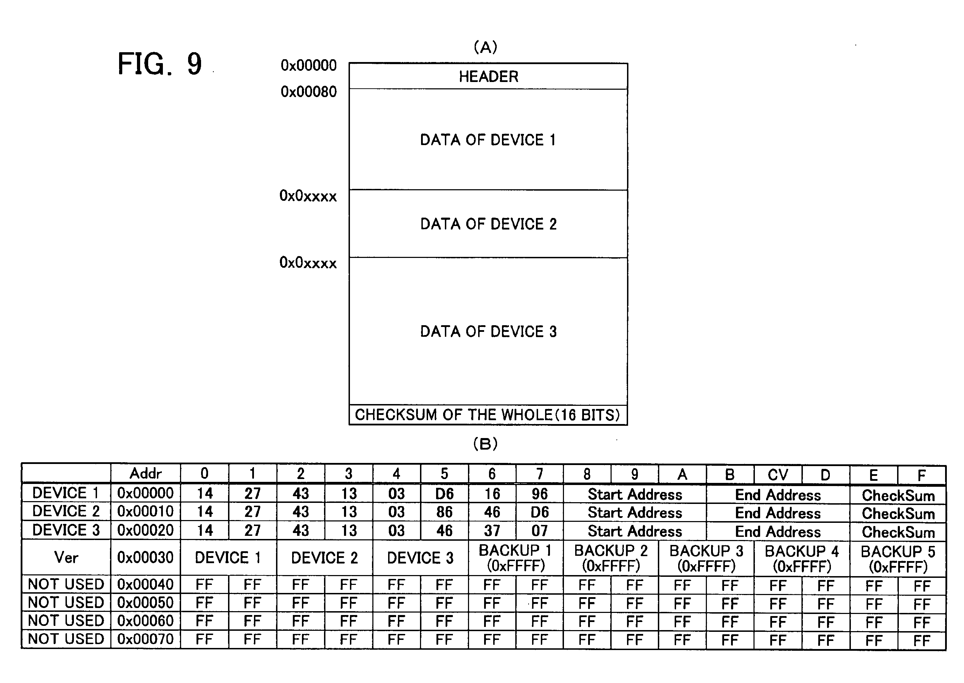

Fig. 9 is a diagram of an example of a format of update data transmitted from the TV 1 to the AV amplifier 2. This example describes a data format when firmware of up to three devices included in the AV amplifier 2 is updated, and Fig. 9 (A) and Fig. 9(B) depict a data format of update data and details of a header, respectively.

In the example depicted in Fig. 9(A), the update data of devices 1 to 3 are described based on a predetermined rule. Therefore, to distinguish the update data from the dummy data, for example, the data form of the dummy data is differentiated from the data form of the update data. The data form of the dummy data may be any data form not used as the update data and, for example, "Lch data: 0x1234, Rch data: 0x5678" is continuously output. This enables the update data extracting portion 24 of the AV amplifier 2 to distinguish the dummy data and extract only the update data.

Fixed data including the identification information (e.g., model name) of the AV amplifier 2 may be added to the header of the update data. In the example of a header depicted in Fig. 9(B), values of 0th to 7th bytes of the devices 1 to 3 included in the AV amplifier 2 are unique fixed values representative of model names and device names. Therefore, the update data of the AV amplifier 2 can be identified by detecting the fixed data of the header. This enables the update data extracting portion 24 of the AV amplifier 2 to distinguish the update data from the dummy data and extract only the update data. An appropriate value different from the fixed values may be set as the dummy data.

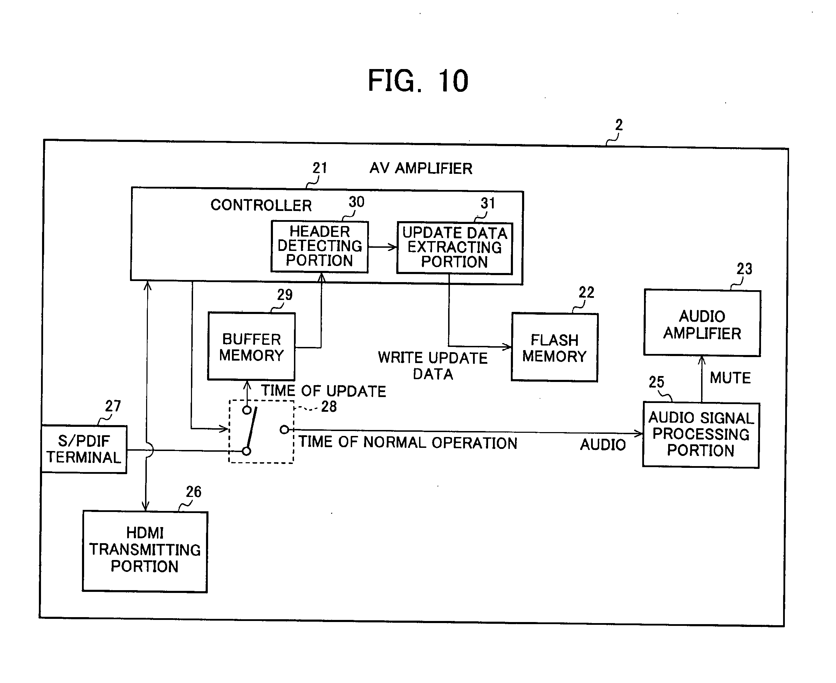

Fig. 10 is a block diagram of a specific exemplary configuration for extracting update data in the AV amplifier 2 and reference numerals 28, 29, 30, and 31 denote a selector switch, a buffer memory, a header detecting portion corresponding to a header detecting means, and an update data extracting portion corresponding to an update data extracting means, respectively. When the AV amplifier 2 receives a CEC message for notification of transmission of update data from the TV 1, the controller 21 switches the selector switch 28 from "time of normal operation" to "time of update". This causes the AV amplifier 2 to make a shift to a firmware update processing mode.

In the AV amplifier 2, the transmission data including dummy data and update data transmitted from the TV 1 is temporarily stored in the buffer memory 29. The header detecting portion 30 detects the header of the update data from the transmission data stored in the buffer memory 29. The update data extracting portion 31 extracts only the update data of the AV amplifier 2 based on fixed data of the header detected by the header detecting portion 30. Identification information included in the fixed data enables determination of whether the update data is that of the AV amplifier 2. The update data extracted by the update data extracting portion 31 is stored in the flash memory 22.

As described above, the update data is distinguished from the dummy data by the fixed data added to the header of the update data and only the update data of the AV amplifier 2 can be extracted. Even in a form of a plurality of connected AV amplifiers, each AV amplifier can extract only the update data of the AV amplifier from a plurality of pieces of update data.

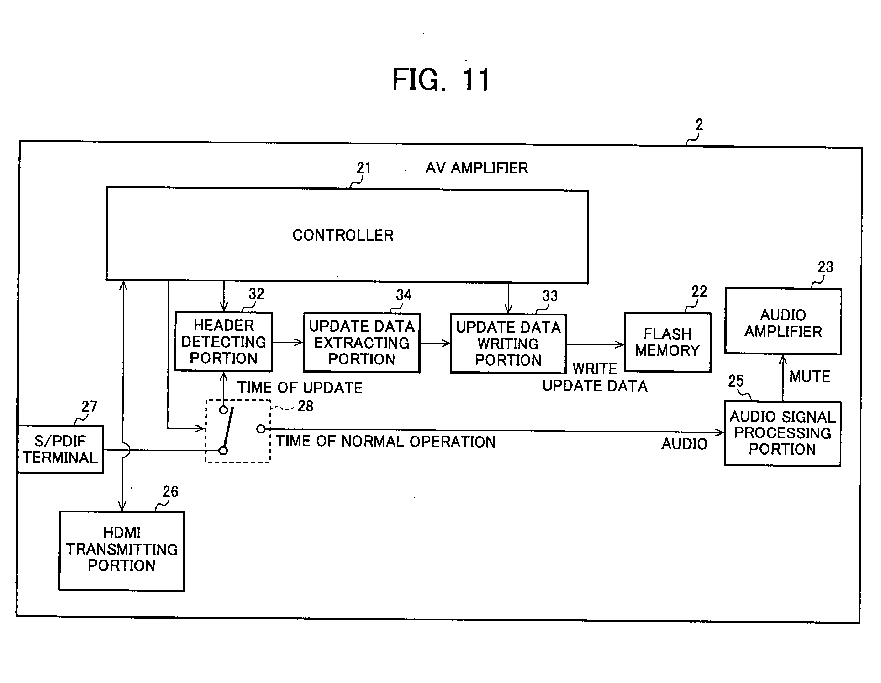

Fig. 11 is a block diagram of another specific exemplary configuration for extracting update data in the AV amplifier 2 and reference numerals 32, 33, and 34 denote a header detecting portion, an update data writing portion, and an update data extracting portion, respectively. As is the case with the configuration of Fig. 10, when the AV amplifier 2 receives a CEC message for notification of transmission of update data from the TV 1, the controller 21 switches the selector switch 28 from "time of normal operation" to "time of update". This causes the AV amplifier 2 to make a shift to a firmware update processing mode.

In the AV amplifier 2, the header detecting portion 32 detects the header of the update data from the transmission data including dummy data and update data transmitted from the TV 1. The update data extracting portion 34 extracts only the update data of the AV amplifier 2 based on fixed data of the header detected by the header detecting portion 32. The update data writing portion 33 writes and stores the update data extracted by the update data extracting portion 34 in the flash memory 22. In this case, as in the example of Fig. 10, the update data is distinguished from the dummy data by the fixed data and only the update data of the AV amplifier 2 can be extracted.

Since the configuration depicted in Fig. 11 includes the header detecting portion 32, the update data extracting portion 34, and the update data writing portion 33 as dedicated hardware, the update data can be stored in the flash memory 22 at higher rate as compared to the configuration depicted in Fig. 10.

### (Second Embodiment)

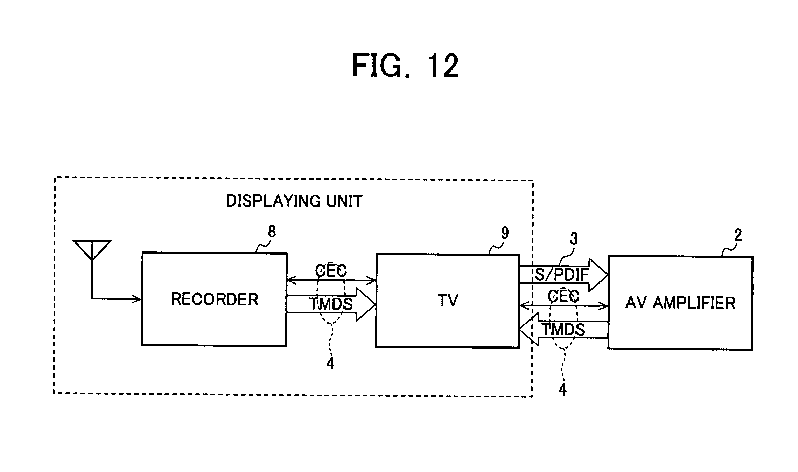

Fig. 12 is a diagram of an example of a software updating system according to a second embodiment of the present invention. A displaying unit of this embodiment is made up of a recorder 8 that is an example of a receiving device and a TV 9 that is an example of a displaying device, and the recorder 8 and the TV 9 are HDMI-connected to each other. The TV 9 and the AV amplifier 2 are HDMI-connected and connected through the S/PDIF line 3 to each other. In this embodiment, the recorder 8 transmits update data through an audio transmission line of the HDMI standard to the TV 9 and the TV 9 transmits update data through the S/PDIF line 3 to the AV amplifier 2. The recorder 8 corresponds to a source device of the HDMI standard.

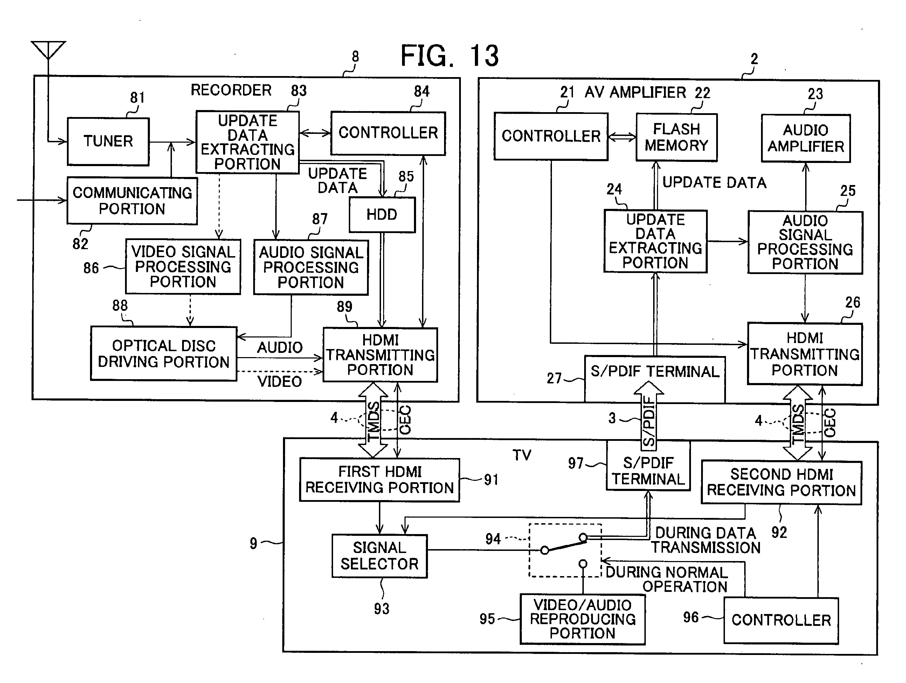

Fig. 13 is a block diagram of an exemplary configuration of the recorder 8, the AV amplifier 2, and the TV 9 depicted in Fig. 12. In Fig. 13, the recorder 8 includes a tuner 81 that receives broadcast wave via an antenna, a communicating portion 82 that connects to a network (communication network) such as the Internet, an update data extracting portion 83 that extracts update data of the AV amplifier 2 from the broadcast wave received by the tuner 81, a controller 84 that controls the operation of the recorder 8, an HDD (hard disc drive) 85 that stores various data such as update data, a video signal processing portion 86 that processes a video signal acquired by the tuner 81 or the communicating portion 82, and an audio signal processing portion 87 that processes an audio signal acquired by the tuner 11 or the communicating portion 12.

The recorder 8 also includes an optical disc driving portion 88 that writes a video signal output from the video signal processing portion 86 and an audio signal output from the audio signal processing portion 87 onto an optical disc such as BD/DVD and reads a video signal and an audio signal recorded on an optical disc, and an HDMI transmitting portion 89 that transmits a video signal and an audio signal to the TV 9 and mutually transmits/receives a CEC message to/from the TV 9 and the AV amplifier 2. The HDMI transmitting portion 89 can utilize the audio transmission line included in the TMDS line to transmit the update data of the AV amplifier 2 acquired from a broadcast network or a communication network.

The TV 9 includes a first HDMI receiving portion 91 connected via the HDMI cable 4 to the HDMI transmitting portion 89 of the recorder 8, a second HDMI receiving portion 92 connected via the HDMI cable 4 to the HDMI transmitting portion 26 of the AV amplifier 2, a signal selector 93 that selectively outputs either input from the first HDMI receiving portion 91 or input from the second HDMI receiving portion 92, a selector switch 94 that switches back and forth between a "normal operation mode" and a "firmware update processing mode", a video/audio reproduction circuit 95 that reproduces video signals and audio signals, a controller 96 that controls the operation of the TV 9, and an S/PDIF terminal 97 that connects the S/PDIF line 3. A tuner circuit of the TV 9 is not depicted.

Specifically, the HDMI transmitting portion 89 of the recorder 8 transmits to the TV 9 and the AV amplifier 2 a CEC message for notification of transmission of update data before the update data is relayed by the TV 9 through the audio transmission line of HDMI and transmitted through the S/PDIF line 3 to the AV amplifier 2. When the TV 9 receives the CEC message from the recorder 8, the signal selector 93 selects input from the first HDMI receiving portion 91 and the selector switch 94 is controlled by the controller 96 to switch the selector switch 94 to the side of "during data transmission". The TV 9 transmits the update data received through the S/PDIF terminal 97 from the recorder 8 to the AV amplifier 2 via the S/PDIF line 3.

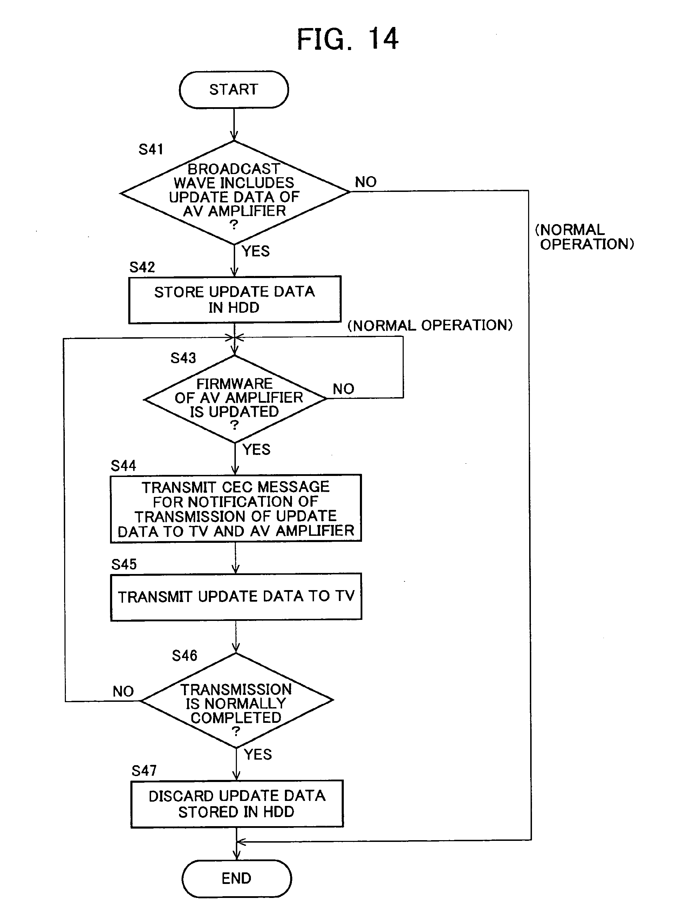

Fig. 14 is a flowchart for explaining an operation example of the recorder 8 in the software updating system depicted in Fig. 12. First, the recorder 8 determines whether broadcast wave includes update data of the AV amplifier 2 (step S41) and, if broadcast wave includes no update data, or if update data is not the update data of the AV amplifier 2, or if version information of the update data is the same as or older than the current version information of the AV amplifier 2 (in the case of NO), the recorder 8 shifts to the normal operation. If broadcast wave includes the update data of the AV amplifier 2 and the version information thereof is newer than the current version information of the AV amplifier 2 at step S41 (in the case of YES), the recorder 8 stores the update data in the HDD 85 (step S42).

The recorder 8 then transmits through the video transmission line in the HDMI standard to the TV 9 a selection screen signal for allowing a user to select whether the firmware of the AV amplifier 2 is updated, thereby displaying an update selection screen on the TV 9 (step S43). If the user does not select the update process on the update selection screen of the TV 9 (in the case of NO), the operation goes back to step S43 and the recorder 8 displays the update selection screen on the TV 9 again at predetermined intervals or at the time of power-off etc., while performing the normal operation. If the user selects the update process on the update selection screen of the TV 9 at step S43 (in the case of YES), the recorder 8 transmits to the TV 9 and the AV amplifier 2 a CEC message for notification of transmission of the update data (step S44). The recorder 8 starts the transmission of the update data through the audio transmission line in the HDMI standard to the TV 9 (step S45).

At steps S44 and S45, the HDMI transmitting portion 89 of the recorder 8 transmits to the TV 9 and the AV amplifier 2 the CEC message for notification of transmission of the update data before transmitting the update data through the audio transmission line of HDMI to the TV 9. On this occasion, the TV 9 and the AV amplifier 2 received the CEC message may completely mute audio output from the time of reception of the CEC message until the transmission processing of the update data is completed.

The recorder 8 then determines whether the transmission processing of the update data is normally completed (step S46), and if the transmission processing is not normally completed due to a failure such as electric power interruption (in the case of NO), the operation goes back to step S43 to display the update selection screen on the TV 9 after recovery from the failure. If the transmission processing is normally completed at step S46 (in the case of YES), the update data stored in the HDD 85 is deleted to terminate the process (step S47).

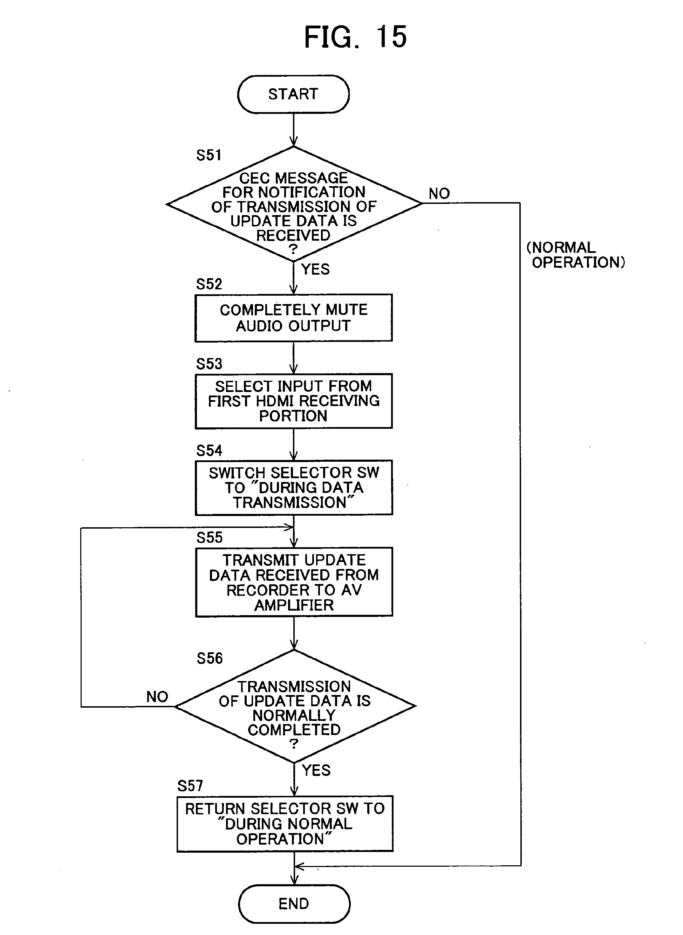

Fig. 15 is a flowchart for explaining an operation example of the TV 9 in the software updating system depicted in Fig. 12. First, the TV 9 determines whether a CEC message for notification of transmission of the update data is received from the recorder 8 (step S51), and if the CEC message is not received (in the case of NO), the TV 9 shifts to the normal operation. If the CEC message is received at step S51 (in the case of YES), the audio output is completely muted (step S52) and the signal selector 93 selects input from the first HDMI receiving portion 91 (step S53). The selector switch 94 is switched to the side of "during data transmission", i.e. , toward the S/PDIF terminal 97 (step S54).

The TV 9 then transmits the update data received from the recorder 8 through the S/PDIF line 3 to the AV amplifier 2 (step S55) and determines whether the transmission of the update data is normally completed (step S56). If the transmission of the update data is normally completed (in the case of YES), the selector switch 94 is switched to the side of "during normal operation" (step S57). If the transmission of the update data is not yet completed (in the case of NO), the operation goes back to step S55 to continue the transmission processing.

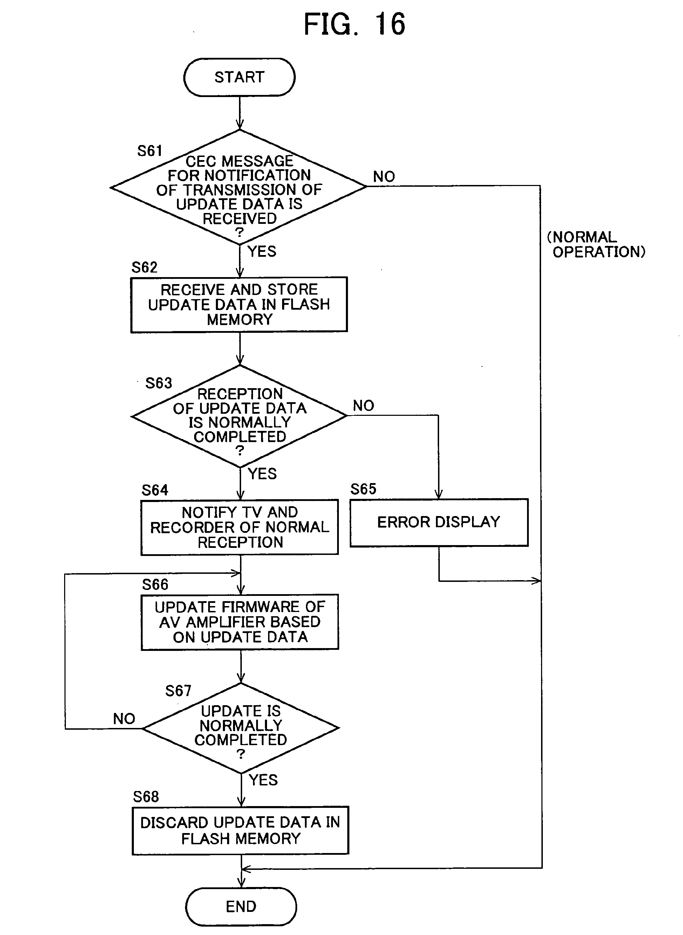

Fig. 16 is a flowchart for explaining an operation example of the AV amplifier 2 in the software updating system depicted in Fig. 12. First, the AV amplifier 2 determines whether a CEC message for notification of transmission of the update data is received from the recorder 8 (step S61) and, if the CEC message is not received (in the case of NO), the AV amplifier 2 shifts to the normal operation. If the CEC message is received at step S61 (in the case of YES), the AV amplifier 2 stores the update data transmitted through the S/PDIF line 3 from the TV 9 in the flash memory 22 (step S62). During the transmission processing of the update data, the control is provided so as to completely mute the audio output of the AV amplifier 2.

The AV amplifier 2 then determines whether the reception of the update data is normally completed (step S63) and, if the reception is normally completed (in the case of YES), the AV amplifier 2 notifies the TV 9 and the recorder 8 of the normal reception (step S64). If the reception is not normally completed at step S63 (in the case of NO), error is displayed on the screen of the TV 9 etc., (step S65) to make a shift to the normal operation.

The AV amplifier 2 then updates the firmware of the AV amplifier 2 based on the received update data (step S66). The AV amplifier 2 determines whether the firmware update process is normally completed (step S67), and if the update process is normally completed (in the case of YES), the AV amplifier 2 discards the update data in the flash memory 22 to terminate the operation (step S68). If the update process is not normally completed due to a failure such as electric power interruption at step S67 (in the case of NO), the operation goes back to step S66 to execute the update process again after recovery from the failure.

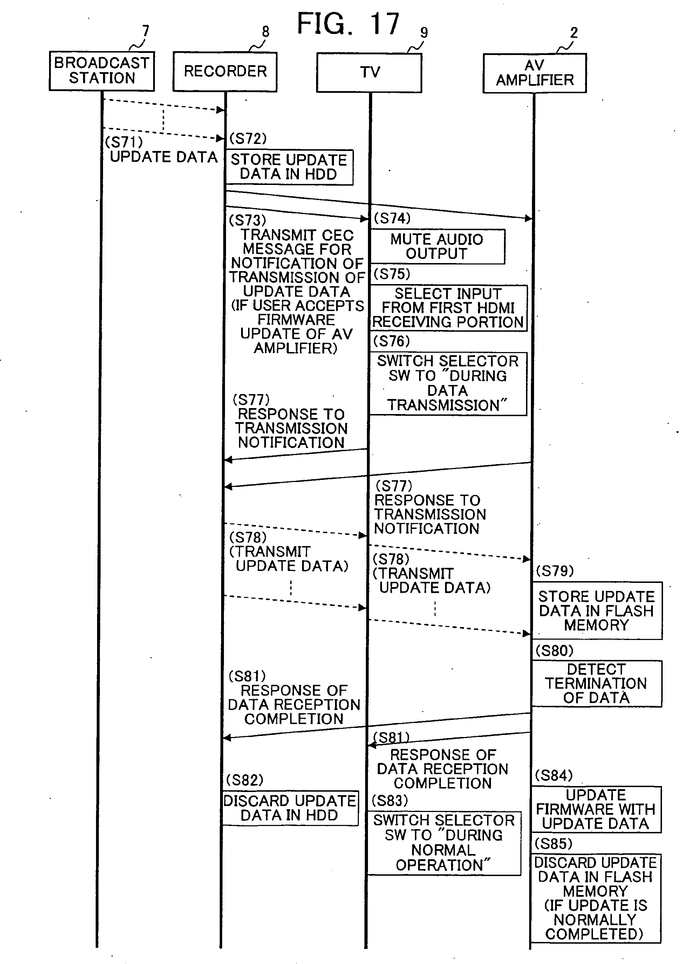

Fig. 17 is a diagram for explaining an example of a command flow by the software updating system depicted in Fig. 12. First, the broadcast station 7 transmits update data of the AV amplifier 2 through broadcast wave (S71), and the recorder 8 receives the broadcast wave and stores the update data of the AV amplifier 2 in the HDD 85 (S72). If a user accepts the firmware update of the AV amplifier 2 on the update selection screen described above, the recorder 8 transmits to the TV 9 and the AV amplifier 2 the CEC message for notification of transmission of the update data (S73).

When receiving the CEC message from the recorder 8, the TV 9 mutes the audio output (S74) and the signal selector 93 selects input from the first HDMI receiving portion 91 (S75). The TV 9 switches the selector switch 84 to the side of "during data transmission" (S76). The TV 9 and the AV amplifier 2 return a response to this CEC message to the recorder 8 (S77).

The recorder 8 then transmits the update data stored in the HDD 85 through the audio transmission line of HDMI to the TV 9 and the TV 9 transmits the update data received from the recorder 8 through the S/PDIF line 3 to the AV amplifier 2 (S78). The AV amplifier 2 stores the update data transmitted via the TV 9 from the recorder 8 in the flash memory 22 (S79) and when the termination of the update data is detected (S80), the AV amplifier 2 returns a response of data reception completion to the TV 9 and the recorder 8 (S81). When receiving the response of data reception completion from the AV amplifier 2, the recorder 8 discards the update data in the HDD 85 (S82).

The TV 9 switches the selector switch 94 to the side of "during normal operation" (S83). The AV amplifier 2 updates the firmware with the update data stored in the flash memory 22 (S84) and discards the update data in the flash memory 22 (S85) if the update process is normally completed.

### (Third Embodiment)

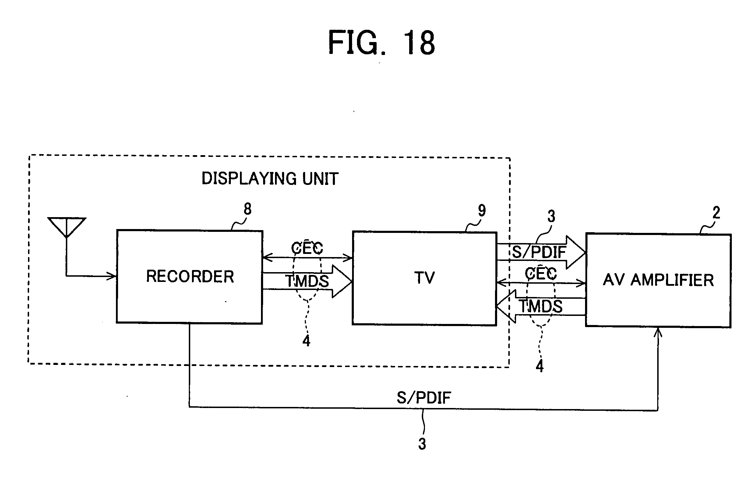

Fig. 18 is a diagram of an example of a software updating system according to a third embodiment of the present invention. A displaying unit of this embodiment is made up of the recorder 8 and the TV 9, and the recorder 8 and the TV 9 are HDMI-connected. The TV 9 and the AV amplifier 2 are HDMI-connected, and the recorder 8 and the AV amplifier 2 are connected via the S/PDIF line 3. The recorder 8 transmits update data through the S/PDIF line 3 to the AV amplifier 2.

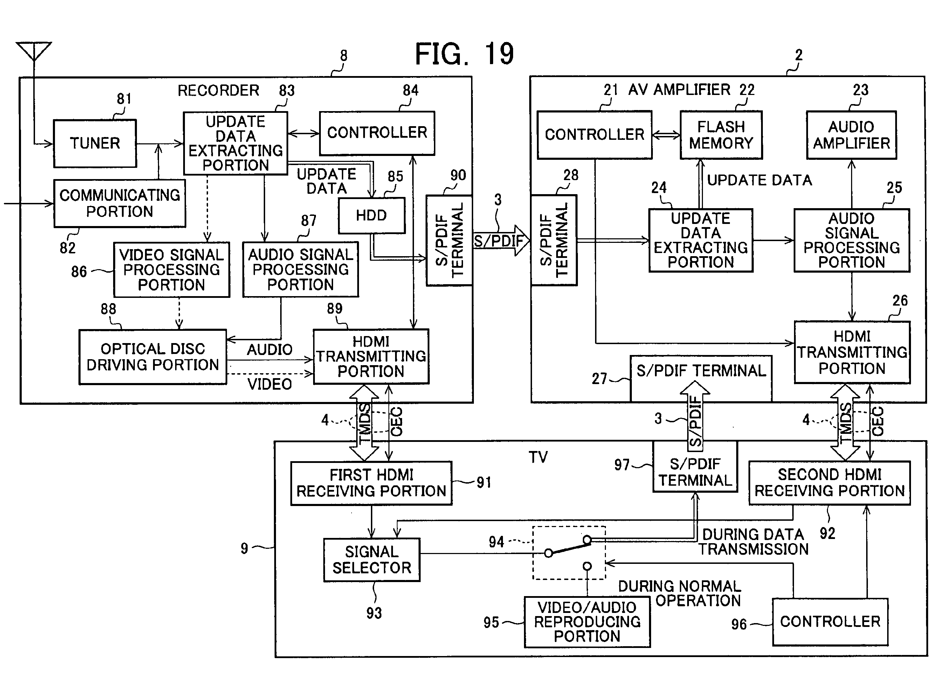

Fig. 19 is a block diagram of an exemplary configuration of the recorder 8, the AV amplifier 2, and the TV 9 depicted in Fig. 18. This configuration is different from the system configuration of the second embodiment (Figs. 12 and 13) in that the recorder 8 includes an S/PDIF terminal 90, that the AV amplifier 2 includes another S/PDIF terminal 28 different from the S/PDIF terminal 27, and that the recorder 8 and the AV amplifier 2 are connected through the S/PDIF line 3. Therefore, although the recorder 8 transmits update data via the audio transmission line of HDMI to the TV 9 in the second embodiment, the update data is directly transmitted from the recorder 8 via the S/PDIF line 3 to the AV amplifier 2 in this embodiment. On this occasion, the audio output through HDMI of the recorder 8 is subjected to the muting processing.

Although S/PDIF is exemplarily illustrated as a digital audio transmission line in the description, the present invention is not limited to S/PDIF. Although HDMI is exemplarily illustrated as a communication interface, the present invention is not limited to HDMI and is generally applicable to communication interfaces having an audio transmission line such as IEEE1394.

### EXPLANATIONS OF LETTERS OR NUMERALS

1, 9...TV; 2...AV amplifier; 3...S/PDIF line; 4...HDMI cable; 5...update firmware data; 6...server apparatus; 7...broadcast station; 8...recorder; 11, 81...tuner; 12, 82...communicating portion; 13, 24, 83...update data extracting portion; 14, 21, 84, 86...controller; 15, 22...flash memory; 16, 94...selector switch; 17, 95...video/audio reproducing portion; 18...HDMI receiving portion; 19, 27, 28, 90, 97...S/PDIF terminal; 23...audio amplifier; 25, 87...audio signal processing portion; 26, 89...HDMI transmitting portion; 28...selector switch; 29...buffer memory; 30, 32...header detecting portion; 33...update data writing portion; 85...HDD; 86...video signal processing portion; 88...optical disc driving portion; 91...first HDMI receiving portion; 92...second HDMI receiving portion; and 93...signal selector.

## Claims

1. A software updating system having a displaying unit and an electronic device connected via a digital audio transmission line, wherein
the displaying unit includes an update data acquiring means that acquires update data for updating software of the electronic device and an update data transmitting means that transmits the acquired update data through the digital audio transmission line to the electronic device,
the electronic device includes a software updating means that updates the software of the electronic device with the update data transmitted from the displaying unit.

2. The software updating system as defined in claim 1, wherein the displaying unit includes an identification information storage means that stores identification information and software version information of the electronic device, and if the update data includes identification information and software version information of the electronic device and the software version information is newer than version information stored in the identification information storage means, the update data transmitting means transmits the update data through the digital audio transmission line to the electronic device.

3. The software updating system as defined in claim 1, wherein the displaying unit includes an identification information storage means that stores identification information and software version information of the electronic device, and if the update data includes identification information and software version information of the electronic device and the software version information is newer than version information stored in the identification information storage means, the displaying unit displays a selection screen for allowing a user to select whether the software of the electronic device is updated, and if the user selects update of the software on the selection screen, the update data transmitting means transmits the update data through the digital audio transmission line to the electronic device.

4. The software updating system as defined in claim 2 or 3, wherein the displaying unit is made up of a displaying device including the update data acquiring means and the update data transmitting means, and the displaying device and the electronic device are connected via the digital audio transmission line and also connected via a communication interface.

5. The software updating system as defined in claim 2 or 3, wherein the displaying unit is made up of a receiving device including the update data acquiring means and a displaying device connected via a communication interface to the receiving device and including the update data transmitting means, and if the displaying device and the electronic device are connected via the digital audio transmission line and also connected via the communication interface, the receiving device transmits the update data through an audio transmission line of the communication interface to the displaying device and the displaying device transmits the update data through the digital audio transmission line to the electronic device.

6. The software updating system as defined in claim 2 or 3, wherein the displaying unit is made up of a receiving device including the update data acquiring means and the update data transmitting means, and a displaying device connected via a communication interface to the receiving device, and if the displaying device and the electronic device are connected via the communication interface and the receiving device and the electronic device are connected via the digital audio transmission line, the receiving device transmits the update data through the digital audio transmission line to the electronic device.

7. The software updating system as defined in any one of claims 4 to 6, wherein the displaying unit transmits a predetermined command via the communication interface to the electronic device to receive and store identification information and software version information of the electronic device from the electronic device in the identification information storage means.

8. The software updating system as defined in any one of claims 4 to 7, wherein the displaying unit transmits to the electronic device a command for notification of transmission of the update data via the communication interface before transmitting the update data through the digital audio transmission line to the electronic device.

9. The software updating system as defined in claim 8, wherein the electronic device includes an audio output means that outputs an audio signal transmitted from the displaying unit to an internal speaker or an external speaker, and mutes audio output by the audio output means from the time of reception of the command until a transmission process of the update data is completed.

10. The software updating system as defined in any one of claims 1 to 9, wherein the update data has update data of the displaying unit combined with update data of one or more electronic devices connectable to the displaying unit.

11. The software updating system as defined in any one of claims 1 to 10, wherein the displaying unit includes an update data storage means that stores update data acquired by the update data acquiring means, and deletes the update data in the update data storage means after the update data transmitting means completes transmission of the update data to the electronic device.

12. The software updating system as defined in any one of claims 1 to 11, wherein the electronic device includes an update data memory means that stores update data transmitted from the displaying unit, and deletes the update data in the update data memory means after the software updating means completes software update.

13. The software updating system as defined in any one of claims 1 to 12, wherein the displaying unit transmits the update data with dummy data added to the beginning thereof.

14. The software updating system as defined in claim 13, wherein a data form of the dummy data is different from a data form of the update data.

15. The software updating system as defined in claim 13, wherein fixed data including identification information of the electronic device is added to a header of the update data.

16. The software updating system as defined in claim 15, wherein the electronic device includes a header detecting means that detects a header of the update data, from transmission data including dummy data and update data transmitted from the displaying unit, and an update data extracting means that extracts update data of the electronic device based on fixed data of the detected header, and the extracted update data is stored in an update data memory means included in the electronic device.

17. The software updating system as defined in claim 15, wherein the electronic device includes a buffer memory that temporarily stores transmission data including dummy data and update data transmitted from the displaying unit, a header detecting means that detects a header of the update data from the transmission data stored in the buffer memory, and an update data extracting means that extracts update data of the electronic device based on fixed data of the detected header, and the extracted update data is stored in an update data memory means included in the electronic device.

18. The software updating system as defined in any one of claims 1 to 17, wherein the update data acquiring means is a receiving means that receives broadcast wave including update data.

19. The software updating system as defined in any one of claims 1 to 17, wherein the update data acquiring means is a network connecting means that connects via a network to a server apparatus storing update data to download the update data from the server apparatus.

20. The software updating system as defined in any one of claims 4 to 9, wherein the communication interface is HDMI, and the electronic device is a repeater device.

21. The software updating system as defined in any one of claims 4 to 9, wherein the communication interface is IEEE1394.

22. The software updating system as defined in any one of claims 1 to 21, wherein the digital audio transmission line is an S/PDIF line.

23. A displaying unit making up the software updating system as defined in any one of claims 1 to 22, comprising:
an update data acquiring means that acquires update data for updating software of an electronic device; and an update data transmitting means that transmits the acquired update data through the digital audio transmission line to the electronic device.

24. A software updating method by a software updating system having a displaying unit and an electronic device connected via a digital audio transmission line, wherein
the displaying unit includes the steps of acquiring update data for updating software of the electronic device and of transmitting the acquired update data through the digital audio transmission line to the electronic device, and
the electronic device includes the step of updating the software of the electronic device with the update data transmitted from the displaying unit.
